# EUROPEAN PATENT APPLICATION

(11) **EP 2 644 653 A1**
(43) Date of publication of application: **02.10.2013**
(21) Application number: 13001141.4
(22) Date of filing: 07.03.2013
(51) Int. Cl.: C08L 53/02, C08L 65/00, C08L 45/00, C08L 53/00

(54) **Transparent thermoplastic resin composition with high ductility and use thereof**

(30) Priority: 29.03.2012 DE 102012006287
(71) Applicant: Topas Advanced Polymers GmbH, 65929 Frankfurt a. Main (DE)
(72) Inventor: Berger, Klaus, 65779 Kelkheim (DE); Bruch, Matthias, 64546 Mörfelden-Walldorf (DE); Tatarka, Paul D., Union, KY 41091 (US)
(74) Representative: Ackermann, Joachim

(57) **Abstract**

Compositions are described comprising at least one cycloolefin polymer and at least two thermoplastically elastomeric block copolymers selected from the group of the hydrogenated styrene-butadiene block copolymers, the hydrogenated styrene-isoprene block copolymers and the hydrogenated styrene-isobutylene block copolymers, where the styrene content in the thermoplastically elastomeric block copolymers is from 20 to 80% by weight, based on the block copolymers, the amount of thermoplastically elastomeric block copolymers is from 5 to 60% by weight, based on the entire mixture, the mixing ratio of the two block copolymers is from 20:80 to 80:20, based on 100 parts of this polymer mixture, and the styrene content in the thermoplastically elastomeric block copolymers and the amounts of these in the mixture of the thermoplastically elastomeric block copolymers have been selected in such a way that the refractive index of the mixture of the thermoplastically elastomeric block copolymers is from 1.520 to 1.540, measured at a wavelength of 589 nm.

These compositions are transparent, and mouldings produced therefrom feature high impact resistance and ductility, and also reduced tendency towards stress whitening.

The compositions have excellent suitability for the production of containers of any type.

## Description

The present invention relates to novel transparent and ductile thermoplastic resin compositions and use thereof, in particular in the field of medicine, of medical technology, or of packaging technology, preferably in the food and drink sector, and the optical industry.

Polycarbonate (hereinafter termed "PC") is an amorphous plastic with heat deflection temperature, expressed as HDT/B, in the region of about 137°C, high optical transparency with transmittance of 90%, determined on injection-moulded plaques of thickness 2 mm, typical of amorphous plastics, a high tensile modulus of 2300 MPa, measured on standard tensile specimens at 1 mm/min, likewise typical of amorphous plastics, and a ductility that is unusual for amorphous plastics, with a penetration energy in the region of 50 J measured at 23°C in accordance with ISO 6603-2. These values have been taken from the "PCS-8047 de" datasheet for MAKROLON^{®} materials from Bayer MaterialScience.

Because PC has this combination of properties, it is used not only for technical applications, such as the production of CD and DVD preforms, spectacle lenses, optical lenses, and glazing in aircraft and automobile construction, but also for applications in contact with food or drink or for medical products, e.g. in the form of kitchenware, implements, babies' bottles, coffee filters, milk jugs, reusable bottles, and also for household articles, such as kitchen-machinery components, vacuum-cleaner housings, mixers or egg cookers, or for disposable medical items.

PC is produced from bisphenol A (hereinafter termed "BPA") and phosgene and comprises small amounts thereof or liberates BPA on heating or in contact with water. BPA is a weak oestrogen, and therefore belongs to the group of what are known as endocrine disruptors which reduce sperm activity in males and are suspected of causing diabetes, cardiovascular problems, libido loss and obesity.

Government authorities have therefore banned the use of PC babies' bottles based on BPA, in order to reduce the risk to babies and small children up to the age of 3 years. The legislation has been in force in Canada since March 2010 and in Europe since June 2011. The French Government has moreover decided to ban BPA in all materials in contact with food or drink from 2014. For containers intended for use by children under 3 years, this ban is already in force from the beginning of 2013. Other countries are currently examining the use of BPA-containing plastics in contact with food and drink. The EU is currently subjecting the suitability of BPA-based PC for medical items to critical examination.

Cycloolefin polymers are known amorphous polymers which are obtainable by way of example with trade mark TOPAS^{®}, APEL^{®}, ZEONOR^{®} or ZEONEX^{®}. Features of cycloolefin polymers are an adjustable HDT/B heat deflection temperature, e.g. in the range from 0 to 200°C, high optical transparency, high stiffness and exceptional purity, and the materials can therefore be used for packaging of food or drink and of medical products, and also as primary means of packing in direct contact with an active ingredient. However, these materials are brittle, particularly if they have a high heat deflection temperature, and they do not therefore represent a problem-free replacement for PC.

Because cycloolefin polymers have, among other properties, excellent transparency they have been used for years in the production of foils, of optical components, and also of containers of all types.

Mouldings made of cycloolefin polymers are, like all plastics mouldings, at risk of breakage when exposed to mechanical stress. Mouldings comprising cycloolefin polymers are known to have a tendency towards breakage when exposed to impact.

It has already been proposed that the impact resistance and ductility of cycloolefin polymer mouldings can be improved by adding rubbery polymers or thermoplastic resins. DE 38 55 009 T2 (corresponding to EP 0 409 291 B1) mentions conventional rubbery polymers, thermoplastic elastomers, rubber-reinforced thermoplastic resins and other ductile or brittle thermoplastic resins as possible additions. Examples mentioned of rubbery polymers are inter alia ABS resins, AES resins, MBS resins, AMBS resins, AAS resins and rubber-modified polystyrene.

DE 198 53 349 A1 discloses polymer alloys comprising one or more cycloolefin polymers and selected polymeric additions. The additions relate to core-shell particles, to copolymers comprising rubber components or to combinations thereof. These polymer alloys are impact-resistant and feature high flexible strength and tensile strain at break and improved processability. Possible additions described are various core-shell particles, and also the product KRATON^{®} D 1184 CS, which is a branched styrene-butadiene block copolymer having 30% by weight styrene content, mouldings of which have a Shore A hardness of 75 and a tensile strain at break of 820%.

DE 695 04 632 T2 (corresponding to EP 0 719 806 B1) describes a cycloolefin polymer composition which features very good impact resistance, transparency and heat resistance. The composition comprises a cycloolefin copolymer which is obtained via copolymerization of an alpha-olefin having at least two carbon atoms and of a selected cycloolefin, such as norbornene, in the presence of a specific component A. Component A here is an aromatic-ring-containing vinyl hydrocarbon/conjugated diene copolymer or a product of hydrogenation thereof, and has some specific properties, inter alia maximum similarity of refractive index in comparison with the cycloolefin polymer without component A.

DE 697 19 751 T2 (corresponding to EP 0 904 319 B1) describes mixtures of cycloolefin polymers with improved impact resistance and good transparency.

The mixture comprises cycloolefin polymer and one or more styrene-containing rubbers as elastomers. Rubber modifiers described are inter alia styrene-ethylene-butylene-styrene copolymers (SEBS) and styrene-butadiene-styrene copolymers (SBS), where SEBS can comprise up to 66% by weight of styrene and SBS can comprise up to 50% by weight of styrene. Amounts that can be present here of the rubber modifier are from 1 to 40% by weight, thus giving an IZOD impact resistance of more than 53.37 J/m, transparency in accordance with ASTM D1003 of more than 85% and haze in accordance with ASTM D1003 of less than 10%. The styrene content mentioned must be regarded as copolymerized polystyrene. This document makes no mention of stress whitening, which however is probably rather poor. SBS copolymers moreover comprise double bonds, and therefore become involved in undesired chemical reactions, and this is discernible by way of example in significant ageing on storage in hot conditions. Polymer mixtures of this type are therefore not very suitable for contact with sensitive ingredients, such as food or drink, medicaments or cosmetic products.

EP 0 761 752 B1 describes resin compositions comprising an amorphous polyolefin resin and a block copolymer which comprises a polymer block of an aromatic vinyl compound and an isobutylene block. The mixtures described feature improved impact resistance, with no impairment of other properties, for example transparency.

A study by G. Khanarian relating to "Rubber Toughened and optically transparent blends of cyclolefin copolymers" in Polymer Eng. And Science, 2000, Vol. 40 (12), 2590-2601 explains that various criteria must be satisfied for efficient impact-resistance modification of cycloolefin copolymer moulding compositions. For good optical properties, the refractive index should ideally be close to the refractive index of the cycloolefin copolymer matrix over the entire visible spectral range, and in order to minimize light scattering the elastomer particles in the cycloolefin copolymer phase should be of minimum diameter, for example smaller than 0.1 µm. In contrast, for good toughness the diameter of the elastomer particles in the cycloolefin copolymer phase should be from 0.5 µm to 1 µm. There should moreover be good adhesion between the elastomer particles and the cycloolefin copolymer matrix, and the melt viscosity of both materials at the processing temperature should be as similar as possible; from this it is possible to derive the requirement that the impact modifier should have high molecular weight. The best results in the study were achieved with KRATON^{®} 1184, a high-molecular-weight, unsaturated radial SBS having 30% by weight polystyrene content ("PSC") and a refractive index of 1.5339, since the ideal particle size was obtained here in combination with TOPAS^{®} 6013, which was also used. In this study it is moreover said that the addition of a mixture of types of SEBS with appropriately adjusted refractive index (SEPTON^{®}) as compatibilizer in combination with KRATON^{®} 1184 moreover improves the impact resistance and transparency of the polymer mixture. The advantages of high shear during compounding are also indicated.

The mixture described in the said study is very similar to the polymer mixtures disclosed in EP 0 904 319 B1, described above. The article by Khanarian provides detailed scientific explanations for impact-modification of TOPAS^{®} cycloolefin copolymers.

EP 1 474 459 B1 describes articles comprising at least one selected hydrogenated block copolymer, e.g. a hydrogenated styrene block copolymer (SBC), and another selected component, e.g. an olefin polymer. Example 13 of the said patent describes mixtures comprising 15% by weight of this SBC in the cycloolefin copolymer TOPAS^{®} 6015. Haze of 12% was observed here in polymer mixtures comprising TOPAS^{®} 6015 and Polymer #24, an SBC having 58% polystyrene content corresponding to the product KRATON^{®} RP6935, whereas haze of 98% was determined for the comparative sample comprising TOPAS^{®} 6015 and KRATON^{®} G-1650 having 30% by weight polystyrene content and therefore having a markedly different refractive index in relation to the cycloolefin copolymer. The haze of pure TOPAS^{®} 6015 is 7%. The average penetration energy for articles made of the polymer mixture comprising the product KRATON^{®} RP6935, 7 J, was only slightly smaller than that of articles comprising the product KRATON^{®} G-1650, for which the average penetration energy observed was 9 J. Articles made of pure cycloolefin copolymer exhibit values smaller than 1 J for average penetration energy. Nevertheless, impact-resistant behaviour throughout all of the specimens was not observed for any mixture.

Our own MVR measurements on polymer mixtures comprising cycloolefin copolymer and KRATON^{®} RP6935 revealed that this grade of KRATON is an SBC of relatively high molecular weight. In accordance with the abovementioned article by Khanarian, this therefore appears to be more suitable for the modification of cycloolefin copolymers than grades of KRATON which have only a moderate molecular weight. EP 1 474 459 B1 does not mention either that SBCs of only moderate molecular weight have advantages in mixtures with cycloolefin copolymers or that homogeneous mixtures of these SBCs with cycloolefin copolymers are possible in the melt, with a further improvement in transparency.

A scientific article by Stricker und Mühlhaupt relating to "Rubber-toughened cycloolefin copolymers" in Angew. Makromol. Chemie, 256 (1998), 101-104 studies the effect of two SEBS impact modifiers with high and low molecular weight and with 30% by weight of PSC on the properties of cycloolefin copolymer mixtures. The cycloolefin copolymer used has 40% norbornene content. If these data relate to % by weight, the glass transition temperature at this norbornene content in the copolymer should be below 0°C; however, if the data are intended to relate to mol%, the glass transition temperature of the cycloolefin copolymer is then 95°C. Because the refractive index of the polymer components used differs greatly, the mixtures are naturally cloudy. In contrast to the more recent publications by Khanarian, the said article states that SEBS materials of low molecular weight are more efficient impact modifiers than SEBS materials of high molecular weight. This is explained by smaller particle sizes. The results described in the said article contradict the more recent results of Khanarian. The use of mixtures of two SEBSs to achieve good optical properties is not mentioned.

JP 07-258,504 A describes cycloolefin copolymer materials with a heat resistance ("HDT") of below 100°C (APEL® grades from-Mitsui), modified with SEBS and SEPS for film applications for the packaging of medicaments. At low layer thicknesses, the films exhibited good transparency, a high water vapour barrier, and also good mechanical strength. The SEPTON^{®} 2104 used had 66% by weight PSC. According to the abovmentioned article by Khanarian, the refractive index of SEPTON^{®} 2104 is 1.5412 at 633 nm, and is therefore much higher than that of cycloolefin copolymer. High-transparency mixtures were consequently not obtained. Adequate transparency for foils was achieved.

JP 2004-156,048 A describes optical films comprising cycloolefin copolymer and SEBS, where the refractive index difference of the two components, measured at 633 nm, is not permitted to be more than 0.02. A mixture of 85% by weight of TOPAS^{®} 6013 S-04 and of 15% by weight of Kraton^{®} RP 6935 exhibited a high tensile strain at break of more than 20% and haze values below 0.1 %, measured on films of thickness 100 µm in accordance with JIS 7127. There was no description of use of a mixture of two SEBS materials.

Against this background, the object of the invention described here consisted in providing a substance composition which approaches the properties of polycarbonate to the greatest possible extent but comprises no BPA. The substance composition according to the invention is intended to have a high heat deflection temperature, and also good optical properties, high stiffness, high tensile modulus, and improved impact resistance in all of the test specimens in the instrumented impact test with ductile fracture behaviour and little stress whitening after exposure to impact or tensile stress. A further intention is that the substance composition according to the invention have minimum chemical reactivity, thus being suitable for contact with sensitive ingredients, such as food or drink, medicaments or cosmetic products.

Surprisingly, it has now been found that compositions comprising cycloolefin polymers and selected impact modifiers have the property profile described above and have excellent suitability as replacement for polycarbonate.

It is moreover surprising that a mixture of two hydrogenated thermoplastically elastomeric block copolymers can be used together with a cycloolefin polymer in a problem-free compounding process. There was considerable prejudice hindering any use of rubber mixtures of this type in combination with the cycloolefin polymer, since it was thought to be a risk that the high shear forces used during the mixing of the components would lead to considerable evolution of heat which in turn would cause degradation of the resultant mixture. Surprisingly, however, the components can be mixed with one another without difficulty.

The present invention provides compositions comprising at least one cycloolefin polymer and at least two thermoplastically elastomeric block copolymers selected from the group of the hydrogenated styrene-butadiene block copolymers, the hydrogenated styrene-isoprene block copolymers and the hydrogenated styrene-isobutylene block copolymers, where the styrene content in the thermoplastically elastomeric block copolymers is from 20 to 80% by weight, based on the block copolymers, the amount of thermoplastically elastomeric block copolymers is from 5 to 60% by weight, based on the entire mixture, the mixing ratio of the two block copolymers is from 20:80 to 80:20, based on 100 parts of this polymer mixture, and the styrene content in the thermoplastically elastomeric block copolymers and the amounts of these in the mixture of the thermoplastically elastomeric block copolymers have been selected in such a way that the refractive index of the mixture of the thermoplastically elastomeric block copolymers is from 1.520 to 1.540, preferably from 1.525 to 1.538 and very particularly preferably from 1.531 to 1.536, measured in each case at a wavelength of 589 nm.

The cycloolefin polymers used according to the invention relate to polymers known per se. They can relate to homopolymers or to copolymers derived from two or more different monomers.

The cycloolefin polymers are produced via ring-opening polymerization or in particular via ring-retaining polymerization, preferably via copolymerization of cyclic olefins, such as norbornene, with non-cyclic olefins, such as alphaolefins, e.g. ethylene. It is optionally possible to use, alongside the said monomers, other ethylenically unsaturated monomers which by way of example have functional groups, for example have functionalization by epoxy, carboxylic acid or carboxamide groups, or which have a plurality of ethylenically unsaturated groups.

The selection of the catalysts can be used in a manner known per se to dictate whether the olefinic ring of the cyclic monomer is opened during the polymerization process or is retained. Examples of processes for the ring-opening polymerization of cycloolefins are found in EP 0 827 975 A2. Examples of catalysts that are mainly used in ring-retaining polymerization are Ziegler-Natta catalysts and metallocene catalysts. An overview of possible chemical structures of the polymers derived from cycloolefins is found by way of example in Pure Appl. Chem., Vol. 77, No. 5, pp. 801-814 (2005).

For the purposes of this description, the expression "cycloolefin polymers" also covers those polymers which have been subjected to a hydrogenation process after polymerization, in order to reduce any residual double bonds.

The polymers used according to the invention relate to thermoplastics which optionally have crosslinkable groups and which feature exceptionally high transparency.

The glass transition temperature (hereinafter also termed "Tg") of the polymers derived from cycloolefins can be adjusted by the person skilled in the art in a manner known per se via selection of the type and amount of cyclic and non-cyclic monomers: in the case of norbornene-ethylene copolymers by way of example it is known that the glass transition temperature increases as the proportion of norbornene component increases in the copolymer. Corresponding relationships apply to combinations of other cyclic monomers with non-cyclic monomers.

For the purposes of the present description, glass transition temperature is the variable determined in accordance with ISO 11373 by differential scanning calorimetry (DSC), the heating rate here being 10 K/minute.

Materials preferably used are cycloolefin polymers, with very particular preference cycloolefin copolymers, with glass transition temperatures from -25°C to 250°C, with preference from 40°C to 250°C, with particular preference from 50°C to 200°C.

In one preferred embodiment of the composition according to the invention, cycloolefin copolymers are used which derive from the copolymerization of at least one cycloolefin of the general formula (I) with at least one alpha-olefin of the formula (II) 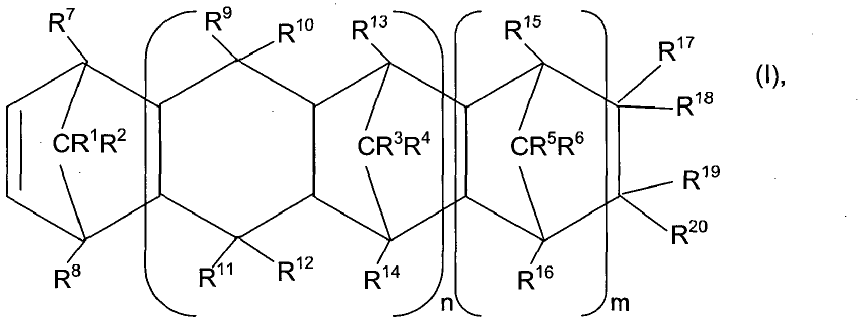 in which
n is 0 or 1,
m is 0 or a positive integer, in particular 0 or 1,
R¹, R², R³, R⁴, R⁵, R⁶ are mutually independently hydrogen, halogen, alkyl groups, cycloalkyl groups, aryl groups and alkoxy groups, R⁷, R⁸, R⁹, R¹⁰, R¹¹, R¹², R¹³, R¹⁴, R¹⁵, R¹⁶ are mutually independently hydrogen and alkyl groups,
R¹⁷, R¹⁸, R¹⁹, R²⁰ are mutually independently hydrogen, halogen and alkyl groups,
where there can also be bonding between R¹⁷ and R¹⁹ in such a way that they form a simple ring or a ring system having a plurality of rings, where the ring(s) can be saturated or unsaturated, 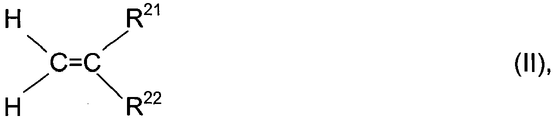 and in which R²¹ and R²² are mutually independently hydrogen and alkyl groups.

In one particularly preferred embodiment, cycloolefin copolymers used derive from compounds of the formulae I and II, in which n is 0, m is 0 or 1, R²¹ and R²² are both hydrogen or R²¹ is hydrogen and R²² is an alkyl group having 1 to 8 carbon atoms, and R¹, R², R⁵ to R⁸ and R¹⁵ to R²⁰ are preferably hydrogen.

In one very particularly preferred embodiment, cycloolefin copolymers used derive from compounds of the formulae I and II, in which the compound of the formula I is norbornene or tetracyclododecene and the compound of the formula II is ethylene and/or propylene.

It is very particularly preferable to use copolymers of the type defined above which have been copolymerized in the presence of a metallocene catalyst.

DE 102 42 730 A1 describes preferred types of cycloolefin copolymers. Cycloolefin copolymers that can be used with very particular preference are the following grades: Topas^{®} 9506, Topas^{®} 8007, Topas^{®} 6013, Topas^{®} 6015 and Topas^{®} E140 (Topas Advanced Polymers GmbH, Frankfurt am Main).

The cycloolefin polymers preferably used according to the invention are produced in a ring-retaining polymerization process, i.e. the bi- or polycyclic structure of the monomer units used is retained during the polymerization process. Examples of catalysts are titanocene, zirconocene or hafnocene catalysts, which are generally used in combination with aluminoxanes as cocatalysts. This production route has been described many times, for example in the patent document mentioned at an earlier stage above.

Typical examples of cycloolefin polymers are copolymers of norbornene or tetracyclododecene with ethylene. Polymers of this type are obtainable commercially, for example with the trade marks APEL^{®}, ARTON^{®}, TOPAS^{®}, ZEONEX^{®} or ZEONOR^{®}.

It is preferable to use cycloolefin polymers which derive from the monomers described above of the formulae I and II, where these monomers I : II have been used in a molar ratio of from 95 : 5 to 5 : 95, and which optionally still comprise small proportions, for example up to 10 mol%, based on the entire amount of monomer, of structural units which derive from other monomers, such as propene, pentene, hexene, cyclohexene and/or styrene.

It is particularly preferable to use cycloolefin polymers which consist essentially of norbornene and ethylene and which optionally still comprise small proportions, e.g. up to 5% by weight, based on the entire amount of monomer, of structural units which derive from other monomers, such as propene, pentene, hexene, cyclohexene and/or styrene.

The composition according to the invention uses, as second component, a mixture of at least two selected thermoplastically elastomeric block copolymers. Thermoplastically elastomeric block copolymers that can be used are compounds selected from the group of the hydrogenated styrene-butadiene block copolymers, of the hydrogenated styrene-isoprene block copolymers and of the hydrogenated styrene-isobutylene block copolymers.

An essential feature of the compositions according to the invention is that the refractive index of the mixture of the at least two selected thermoplastically elastomeric block copolymers is substantially the same as the refractive index of the cycloolefin polymer, where the styrene content in the thermoplastically elastomeric block copolymers and the amounts of these in the mixture of the thermoplastically elastomeric block copolymers have been selected in such a way that the refractive index of the mixture of the thermoplastically elastomeric block copolymers is from 1.520 to 1.540. For the purposes of the present invention, an Abbe refractometer is used to determine the refractive index (D-line, 589 nm) measured at a wavelength of 589 nm.

The refractive index of the mixture of the thermoplastic elastomeric block copolymers is determined firstly via the polystyrene content of the individual block copolymers and secondly via the proportions of the individual block copolymers in the mixture.

Polystyrene content in the thermoplastically elastomeric block copolymers used according to the invention is typically from 20 to 80% by weight, based on the total amount of block copolymer. It is preferable to use thermoplastically elastomeric block copolymers which have polystyrene content of from 40 to 80% by weight, in particular from 50 to 70% by weight and very particularly preferably from 55 to 60% by weight.

The amount of the individual components of the mixture of the two thermoplastic elastomeric block copolymers is usually from 20:80 to 80:20 parts by weight, based on 100 parts of the said polymer mixture. It is preferable to use mixtures of two thermoplastically elastomeric block copolymers in which the amount of the two components is from 25:75 to 75:25 parts by weight, based on 100 parts of the said polymer mixture.

Thermoplastically elastomeric block copolymers used according to the invention are selected from the group of the hydrogenated styrene-butadiene block copolymers, of the hydrogenated styrene-isoprene block copolymers and of the hydrogenated styrene-isobutylene block copolymers. These materials relate to known polymers which are commercially available.

It is particularly preferable that hydrogenated styrene-butadiene block copolymers, in particular in the form of mixtures of two different hydrogenated styrene-butadiene block copolymers, are used which have at least one block derived from styrene and which have at least one block derived from butadiene and from styrene.

It is particularly preferable that hydrogenated styrene-isoprene block copolymers, in particular in the form of mixtures of two different hydrogenated styrene-isoprene block copolymers, are used which have at least one block derived from styrene and which have at least one other block derived from isoprene.

It is particularly preferable that hydrogenated styrene-isobutylene block copolymers, in particular in the form of mixtures of two different hydrogenated styrene-isobutylene block copolymers, are used which have at least one block derived from styrene and which have at least one other block derived from isobutylene.

Examples of hydrogenated styrene-butadiene block copolymers are products with the trade mark KRATON^{®} from KRATON Performance Polymers, Inc, USA.

Examples of hydrogenated styrene-isoprene block copolymers are products with the trade mark SEPTON^{®} from Kuraray Co., Ltd, Japan.

Examples of hydrogenated styrene-isobutylene block copolymers are products with the trade mark SIBSTAR^{®} from Kanaka Corp., Japan.

To produce the mixtures of the thermoplastically elastomeric block copolymers, compounds of the same type are usually mixed with one another, i.e. two or more types of hydrogenated styrene-butadiene block copolymers or two or more types of hydrogenated styrene-isoprene block copolymers or two or more types of hydrogenated styrene-isobutylene block copolymers.

Mixtures of thermoplastically elastomeric block copolymers used with very particular preference in the compositions according to the invention are mixtures made of two or more types of hydrogenated styrene-butadiene block copolymers.

It is preferable here that one of the hydrogenated styrene-butadiene block copolymers is selected in such a way that its polystyrene content is from 55 to 65% by weight, based on the total amount of block copolymer, and another of the hydrogenated styrene-butadiene block copolymers is selected in such a way that its polystyrene content is from 35 to 50% by weight, based on the total amount of block copolymer.

Examples of hydrogenated styrene-butadiene block copolymers are found in EP 1 474 459 B1.

These materials preferably relate to thermoplastic elastomeric block copolymers having from 55 to 65% by weight polystyrene content, based on the total amount of block copolymer, and respectively having at least one A block and at least one B block where, prior to the hydrogenation process, each A block is mutually independently a styrene homopolymer block and each B block is independently thereof a copolymer block with specific distribution made of at least butadiene and at least styrene where, after the hydrogenation process, from 0 to 10% of the arene double bonds have been reduced and at least 90% of the conjugated double bonds of the butadiene have been reduced, where each A block has an average molecular weight of from 3000 to 60 000 (number average) and each B block has an average molecular weight of from 30 000 to 300 000 (number average), where each B block has terminal regions which are adjacent to the A blocks and which have more than the average amount of styrene units, where the total amount of styrene in the hydrogenated block copolymer is from 20 to 80% by weight and where the proportion of styrene in each B block is from 10 to 75% by weight.

A feature of particularly preferred compositions is a heat deflection temperature HDT/B, measured in accordance with ISO 75-1 and -2 of 2004, above 100°C, preferably of from 120 to 170°C, where these measurements were carried out at a heating rate of 50 K/h, and the values measured are based on measurements using a nominal applied tension of 0.45 MP on standard injection-moulded tensile specimens of thickness 4 mm, the deflection of the standard injection-moulded tensile specimens being 0.36 mm.

A feature of other preferred compositions is haze of from 0.5 to 15%, preferably from 2 to 10%, these values being based on measurements on 2 mm injection-moulded plaques in accordance with ISO 14782 of August 1999.

A feature of other preferred compositions is transmittance above 85%, preferably above 87%, where these values are based on measurements on 2 mm injection-moulded plaques in accordance with DIN ISO 13468-1 (transmittance) of January 1997.

A feature of other preferred compositions is a tensile modulus of from 1800 to 3000 MPa, where these values are based on measurements on standard injection-moulded tensile specimens of thickness 4 mm and on a test velocity of 1 mm/min in accordance with DIN EN ISO 527-1 and -2 of 1996.

A feature of other preferred compositions is penetration energy of more than 10 J, preferably more than 20 J, where these values are based on measurements in the instrumented penetration test in accordance with DIN EN ISO 6603-2 C of 2000 on injection-moulded plaques of thickness 2 mm, using a clamping ring diameter of 40 mm and a diameter of 20 mm for the hemispherical tup insert.

A feature of other preferred compositions is a stress whitening value of from 0 to 50 mm³, preferably from 0 to 30 mm³, where these values are based on measurements on standard tensile specimens of thickness 4 mm, using impact testing equipment equipped with a 0.5 J hammer.

A feature of other preferred compositions is that the change in length at onset of stress whitening on exposure to tensile stress is at least 2 mm, preferably at least 3.5 mm, where these values are based on measurements where, using tensile strength testing equipment, standard tensile specimens of thickness 4 mm were used with a clamped length of 115 mm, the clamping jaws were separated at 50 mm/min, and the increases from the initial haze value were at least 10%.

The compositions according to the invention can in principle be produced via mixing of the individual components in apparatuses suitable for this purpose. Since the thermoplastically elastomeric block copolymers relate to rubbery polymers, it is preferable that the components are mixed in assemblies for producing rubber mixtures.

The components can advantageously be mixed in kneaders, on roll mills, and in extruders.

The amount of cycloolefin polymer in the composition according to the invention is usually from 40 to 95% by weight, based on the entire mixture, preferably from 50 to 90% by weight.

The amount of thermoplastically elastomeric block copolymers in the composition according to the invention is usually from 5 to 60% by weight, based on the entire mixture, preferably from 10 to 30% by weight.

The composition according to the invention can optionally also comprise additives known per se, alongside the cycloolefin polymer and the thermoplastically elastomeric block copolymers that must be present. The total proportion of the said additives is usually up to 50% by weight, based on the entire mixture, preferably up to 30% by weight.

Additives, also termed auxiliaries, are substances of which small amounts are added to the compositions according to the invention in order to achieve or improve certain properties, for example in order to achieve a favourable effect on production, storage, or processing, or product properties during and after the usage phase.

The additives can relate to processing aids, for example to oils or waxes, or to additions which give the composition according to the invention a particular functionality, examples being plasticizers, light stabilizers, matting agents, preservatives, biocides, antioxidants, antistat agents, flame retardants, reinforcing agents, such as fibres, extenders, such as fillers, pigments and dyes.

Preferred additives are fillers, fibres, in particular glass fibres, pigments, dyes, antioxidants, UV stabilizers and/or plasticizers.

The invention also provides a process for the production of the compositions described above, by mixing at least one cycloolefin polymer and at least two thermoplastically elastomeric block copolymers selected from the group of the hydrogenated styrene-butadiene block copolymers, of the hydrogenated styrene-isoprene block copolymers and of the hydrogenated styrene-isobutylene block copolymers with one another in a kneader, on a roll mill, or in extruders, where the styrene content in the thermoplastically elastomeric block copolymers and the amounts of these in the mixture of the thermoplastically elastomeric block copolymers have been selected in such a way that the refractive index of the mixture of the thermoplastically elastomeric block copolymers is from 1.520 to 1.540.

In one preferred variant of the process according to the invention, the mixing of the cycloolefin polymer and of the two thermoplastically elastomeric block copolymers takes place in a twin-screw extruder.

In an alternative variant of the process according to the invention, the two thermoplastically elastomeric block copolymers with different refractive index are first separately mixed in the melt in a first compounding process, and then are mixed in the melt with the cycloolefin polymer in a second compounding process.

In this variant, strict temperature control is required especially in the second step, since the additional processing step can have a severe adverse effect on the material, and the optical properties of the finished mixture can be impaired thereby. The risk of polymer degradation also increases, and consequently higher contents of styrene monomer can be observed in the finished composition, e.g. by means of gas chromatography. Higher styrene contents in the polymer mixture can potentially have adverse effects on the taste and odour of mouldings made of the said polymer mixture.

A feature of the compositions according to the invention is high transparency, and also high resistance to impact, and they exhibit remarkably little tendency towards stress whitening. These compositions can preferably be used in the field of medicine, of medical technology, of packaging technology, preferably in the food and drink sector, and in the optical industry.

The compositions according to the invention are preferably used for the production of containers of any type, of foils, of sheets or of optical components, such as lenses or gratings.

The compositions according to the invention are very particularly preferably suitable for the production of pharmaceutical-substance containers, of syringe bodies, of containers for food or drink, of lenses or gratings for optical devices, of optical conductors, or of sheets or foils for packaging.

Examples of preferred pharmaceutical-substance containers are bottles for solid or liquid pharmaceutical substances, cartridges or bags for medical ingredients, for example for infusion solutions.

Examples of preferred containers for food or drink are bottles, boxes, vessels, cups and dishes in which food or drink is stored or is provided for consumption. It is particularly preferable that the compositions according to the invention are used for the production of babies' bottles.

The examples below describe the invention. No resultant restriction is intended.

### General description of the production process for the polymer mixtures

Unless otherwise mentioned, the polymer mixtures comprising a cycloolefin copolymer as amorphous thermoplastic matrix and at least two thermoplastic elastomers with different refractive index were produced in the melt in a Leistritz LSM micro 34 corotating twin-screw extruder with length L/diameter D = 32 at 200 revolutions per minute and with a comparatively low barrel temperature of 200/210/6*220°C. This method introduced, during the mixing process, a large amount of mixing energy in the form of shear which ensured that distribution of the thermoplastic elastomers in the thermoplastic matrix was homogeneous and fine.

The screw configuration used was composed of at least two mixing zones separated by conveying elements. This configuration is helpful for bringing about fine dispersion of the elastomers.

Furthermore, some of the constituents of the polymer mixture were not charged to the metering equipment at the ingoing end of the extruder, but instead the two elastomers with different refractive index were first introduced into the metering unit at the ingoing end of the extruder, and mixed in the melt. The thermoplastic cycloolefin copolymer, in the form of pelletized material, was by way of example metered into the elastomer melt by way of a side feed, e.g. in the third of the total of eight sections. This procedure has proved to be useful for producing, on every occasion, mixed elastomer domains with the desired average refractive index.

### Inventive examples 1-5 and comparative examples 1-4

Polymer mixtures were produced from an amorphous, thermoplastic cycloolefin copolymer and from different impact modifiers.

A product obtained via copolymerization of norbornene and ethylene, TOPAS^{®} 6013 S-004, produced by: Topas Advanced Polymers GmbH, Frankfurt am Main, Germany, was used as amorphous, thermoplastic cycloolefin copolymer.

Various styrene block copolymers from Kraton Polymer LLC, Houston TX USA were used as impact modifiers. The grades used here were KRATON^{®} A1535, KRATON^{®} MD1537 and KRATON^{®} A1536.

The composition of the resultant polymer mixtures, and some properties of the said polymer mixtures, are shown in Table 1 below. Details of the tests carried out are found in the legend for Table 1.

**Table 1: Properties of mixtures of TOPAS^{®} 6013S-04 and of selected impact modifiers**

| Example No. | 6013 (% by wt.) | Impact modifier (% by wt.) | PSC (% by wt.) | T (%) | H (%) | MVR ml/10 min |
|---|---|---|---|---|---|---|
| CE1 | 100 | 0 | 0 | 91.3 | 0.5 | 13.2 |
| CE2 | 80 | A1535 (20) | 58 | 89.0 | 20.0 | 3.98 |
| CE3 | 80 | MD1537 (20) | 60 | 79.4 | 39.0 | 8.29 |
| CE | 0 | A1535 (12), A1536 (8) | 51 | 88.4 | 20 | 7.0 |
| IE1 | 80 | MD1537 (12) A1536 (8) | 52 | 89.8 | 6 | 8.9 |
| IE2 | 80 | MD1537 (14.4) A1536 (5.6) | 54.4 | 89.7 | 4 | 9.2 |

| Example No. | 6013 (%by wt.) | Impact modifier (% by wt.) | PSC (% by wt.) | T (%) | H (%) | MVR ml/10 min |
|---|---|---|---|---|---|---|
| IE3 | 80 | MD1537 (17.8) A1536 (3) | 57 | 88.8 | 7 | 9.2 |
| IE4 | 80 | MD1537 (19) A1536 (1) | 59 | 85.2 | 24 | 9.0 |
| IE5 | 75 | MD1537 (18) A1536 (7) | 54.4 | 85.9 | 7 | 8.7 |

Column 1 gives the number of the example. IEx here indicates an example according to the invention numbered x. CEx indicates a comparative example with number x according to the prior art.

Column 2 gives the nominal content in per cent by weight of amorphous, thermoplastic cycloolefin copolymer in the polymer mixture.

Column 3 gives the amount and composition of the impact modifiers used. Commercially available styrene block copolymers from Kraton Polymers LLC, Houston, Texas, US were used.

Column 4 gives the calculated polystyrene content ("PSC") of the impact modifier. The values assumed here, in accordance with the data sheets from Kraton Polymers, were 58% by weight for the grade A1535 (Kraton specification from 56.3 to 60.3%), 60% by weight for the grade MD1537 (Kraton specification according to data sheet from 58 to 62% by weight) and 40% by weight for the grade A1536 (Kraton specification according to data sheet from 37 to 44% by weight).

Column 5 gives the transmittance T measured in %. The measurement was made on injection-moulded plaques of thickness 2 mm in accordance with DIN ISO 13468-1 (transmittance) of January 1997. The measurement was made with a compensation port.

Column 6 gives the haze H measured in %. The measurement was made on injection-moulded plaques of thickness 2 mm in accordance with ISO 14782 of August 1999. The measurement was made with a compensation port.

Column 7 gives the melt volume rate MVR in ml/10 min. The measurement was made at 260°C and with an applied weight of 2.16 kg in accordance with DIN ISO 1133 of October 2002.

Surprisingly, it has been found that - as shown in Examples IE1 to IE4 according to the invention - it is possible to achieve homogeneous mixing of the two KRATON^{®} grades MD1537 and A1536 into TOPAS^{®} 6013S-04 in the melt, and the materials obtained have improved optical properties in comparison with the polymer mixtures with identical content of only MD1537 (CE3) or A1535 (CE2), particularly with respect to haze, which represents scattering behaviour. The best optical properties were observed for the polymer mixture made of TOPAS^{®} 6013 S-04 with the mixture of KRATON® grades MD1537 (14.4% by weight) and A1536 (5.6% by weight); this corresponds to a ratio by weight of the two impact modifiers of 72%/28%.

A mixture of the two KRATON^{®} grades A1535 and A1536 is likewise possible; this is described in CE4. However, the resultant mixture has much poorer optical properties than mixtures comprising amorphous, thermoplastic cycloolefin copolymer.

As shown by the low MVR value, 4 ml/10 min, of the polymer mixture with 20% by weight of KRATON^{®} A1535 (CE2), this impact modifier has relatively high molecular weight. The MVR value determined for the polymer mixture with 20% by weight of KRATON^{®} MD1537 (CE3) was 8.3 ml/10 min. There is therefore only little alteration in this value in comparison with pure TOPAS^{®} 6013 S-04. KRATON^{®} MD1537 therefore has a moderate molecular weight and, under the processing conditions used, had a melt viscosity similar to that of TOPAS^{®} 6013 S-04.

Although good optical properties are observed for polymer mixtures mixed in the melt comprising amorphous, thermoplastic cycloolefin copolymers and mixtures of KRATON^{®} impact modifiers, polymer mixtures of this type should in accordance with the publication by G. Khanarian lack impact resistance or have only very low impact resistance, since the molar mass of the modifier is too small and therefore the particle diameter obtained is not ideal.

Table 2 below shows other properties of the polymer mixtures produced. Details of the tests carried out are found in the legend for Table 2.

**Table 2: Other properties of mixtures of TOPAS^{®} 6013S-04 and of selected impact modifiers**

| Example No. | HDT/B (°C) | H (%) | T (%) | Et (MPa) | Ep (J) | Fracture | V(SW) (mm³) | ΔI SW (mm) |
|---|---|---|---|---|---|---|---|---|
| CE1 | 128 | 0.5 | 91.3 | 2960 | 0.8 | brittle | n.a.^{*)} | n.a.^{*)} |
| CE2 | 125 | 20 | 89.9 | 2200 | 40 | stable, ductile | 150 | 2 |
| CE4 | 124 | 20 | 88.4 | 1950 | 38 | stable, ductile | 170 | 2 |
| IE2 | 125 | 3.3 | 89.7 | 2210 | 28 | unstable, ductile | 8 | 4 |
| IE5 | 125 | 6.1 | 88.9 | 2080 | 46 | stable, ductile | 6 | 4 |

| | | | | | | | | |
|---|---|---|---|---|---|---|---|---|
| ^{*)} n.a. = not applicable | | | | | | | | |

Column 1 gives the number of the example with the composition in accordance with Table 1.

Column 2 gives the heat deflection temperature HDT/B, measured in accordance with ISO 75-1 and -2 of 2004. The measurement was made with a nominal applied tension of 0.45 MP on standard tensile specimens of thickness 4 mm produced by way of injection moulding. The heating rate used for the measurement was 50 K/h. The table gives the temperature at which deflection was 0.36 mm.

Column 3 gives the haze H measured in %. The measurement was made on 2 mm injection-moulded plaques in accordance with ISO 14782 of August 1999. The measurement was made with a compensation port.

Column 4 gives the transmittance T measured in %. The measurement was made on 2 mm injection-moulded plaques in accordance with DIN ISO 13468-1 (transmittance) of January 1997. The measurement was made with a compensation port.

Column 5 gives the tensile modulus Et in MPa, measured in accordance with DIN EN ISO 527-1 and -2 of 1996. The measurement was made on standard tensile specimens of thickness 4 mm, produced via injection moulding. The test velocity used was 1 mm/min.

Column 6 gives the penetration energy Ep. The measurement was made in accordance with the instrumented penetration test in accordance with DIN EN ISO 6603-2 C of 2000, on injection-moulded plaques of thickness 2 mm. The tests used a clamping ring diameter of 40 mm and a hemispherical tup insert of diameter 20 mm.

Column 7 gives the nature of fracture in the instrumented penetration test of DIN EN ISO 6603-2 C of 2000. The measurement was made on injection-moulded plaques of thickness 2 mm. "Stable, ductile" indicates ductile behaviour with stable crack formation; "unstable, ductile" indicates ductile behaviour with unstable crack formation.

Column 8 gives the average volume of stress whitening. Measurement of stress whitening used impact testing equipment equipped with a 0.5 J hammer. The volume determined was that of the haze resulting from impact on a test specimen at room temperature. The measurement was made on 3 different standard tensile specimens of thickness 4 mm after moderate impact with the 0.5 J hammer, which was sufficient to cause fracture of pure TOPAS^{®} 6013 S-04. The extent of stress whitening at the point of contact was measured in three dimensions here by using a ruler, and the volume was calculated via multiplication of the three maximal dimensions. It is thus possible to make a quantitative distinction between the desired small volume of stress whitening and a large volume of stress whitening.

Clouding of the test specimen can also occur when it is subjected to tensile strain. In order to determine this type of clouding, the test specimen is clamped into tensile strength testing equipment, and the clamping jaws are separated at a velocity of 50 mm/min. Tensile strain produces "whitening" of the test specimen; this is typical of multiphase mixtures, and indicates onset of failure of the test specimen. Column 9 gives the length change in mm at which onset of visible stress whitening occurred in the centre of the test specimen, for standard tensile specimens of thickness 4 mm, a clamped length of 115 mm, and 50 mm/min. The length changes shown are those for onset of an increase of at least 10% in haze H over the initial value. High values for length changes prior to onset of stress whitening are desirable.

Comparative Example CE1 shows the typical behaviour of TOPAS^{®} 6013-S04. Test specimens made of this copolymer are characterized by high heat resistance, and excellent optical properties, and also by brittle behaviour with low penetration energy without stress whitening. Exposure of these test specimens to moderate impact leads to fracture.

The polymer mixture according to Comparative Example CE2 comprising 20% of KRATON^{®} A1535 has poor optical properties, but still has high heat deflection temperature and high tensile modulus, and has excellent ductility on exposure to impact, but exhibits high and undesirable stress whitening on exposure to tension or to impact.

No useful investigation of stress whitening was possible for the polymer mixture according to Comparative Example CE3, because of the level of haze (whiteness) of the mixture prior to testing.

Both of the polymer mixtures according to the invention according to Examples IE2 and IE5 with a total of 20 and, respectively, 25% by weight of KRATON mixture, produced by way of melt extrusion, exhibit good optical properties, and still exhibit high heat deflection temperature and high tensile modulus, and exhibit increased ductility on exposure to impact and the desired low tendency towards stress whitening on exposure to tension and to impact. Impact resistance could be increased further by increasing the total proportion of impact modifier from 20 to 25%, without any drastic impairment of the other properties.

## Claims

1. Compositions comprising at least one cycloolefin polymer and at least two thermoplastically elastomeric block copolymers selected from the group of the hydrogenated styrene-butadiene block copolymers, the hydrogenated styrene-isoprene block copolymers and the hydrogenated styrene-isobutylene block copolymers, where the styrene content in the thermoplastically elastomeric block copolymers is from 20 to 80% by weight, based on the block copolymers, the amount of thermoplastically elastomeric block copolymers is from 5 to 60% by weight, based on the entire mixture, the mixing ratio of the two block copolymers is from 20:80 to 80:20, based on 100 parts of this polymer mixture, and the styrene content in the thermoplastically elastomeric block copolymers and the amounts of these in the mixture of the thermoplastically elastomeric block copolymers have been selected in such a way that the refractive index of the mixture of the thermoplastically elastomeric block copolymers is from 1.520 to 1.540, measured at a wavelength of 589 nm.

2. Compositions according to Claim 1, **characterized in that** the cycloolefin polymer is a cycloolefin copolymer which derives from the copolymerization of at least one cycloolefin of the general formula (I) with at least one alpha-olefin of the formula (II) 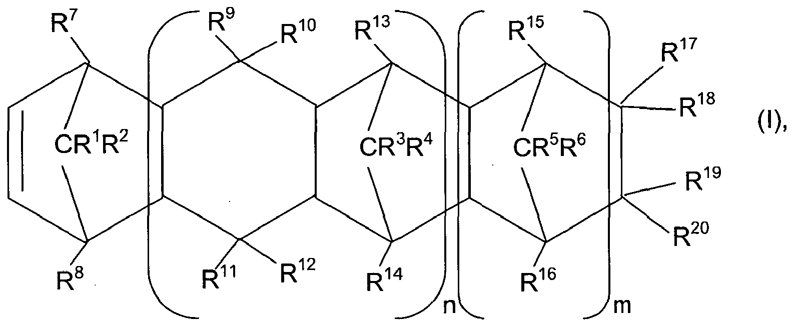 in which
n is 0 or 1,
m is 0 or a positive integer, in particular 0 or 1,
R¹, R², R³, R⁴, R⁵, R⁶ are mutually independently hydrogen, halogen, alkyl groups, cycloalkyl groups, aryl groups and alkoxy groups, R⁷, R⁸, R⁹, R¹⁰, R¹¹, R¹², R¹³, R¹⁴, R¹⁵, R¹⁶ are mutually independently hydrogen and alkyl groups,
R¹⁷, R¹⁸, R¹⁹, R²⁰ are mutually independently hydrogen, halogen and alkyl groups,
where there can also be bonding between R¹⁷ and R¹⁹ in such a way that they form a simple ring or a ring system having a plurality of rings, where the ring(s) can be saturated or unsaturated, 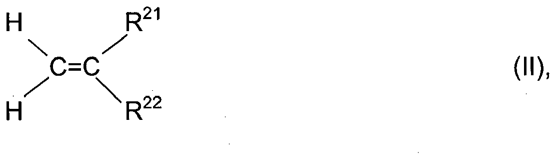 and in which R²¹ and R²² are mutually independently hydrogen and alkyl groups.

3. Compositions according to Claim 2, **characterized in that** the cycloolefin polymer is a cycloolefin copolymer which derives from compounds of the formulae I and II, in which n is 0, m is 0 or 1, R²¹ and R²² are both hydrogen or R²¹ is hydrogen and R²² is an alkyl group having 1 to 8 carbon atoms, and R¹, R², R⁵ to R⁸ and R¹⁵ to R²⁰ are preferably hydrogen.

4. Compositions according to Claim 3, **characterized in that** the cycloolefin polymer is a cycloolefin copolymer which derives from compounds of the formulae I and II, in which the compound of the formula I is norbornene or tetracyclododecene and the compound of the formula II is ethylene and/or propylene, where these have in particular been polymerized in the presence of a metallocene catalyst.

5. Compositions according to Claim 1, **characterized in that** thermoplastically elastomeric block copolymers are used whose polystyrene content is from 40 to 80% by weight, based on the total amount of block copolymer, in particular from 50 to 70% by weight and very particularly preferably from 55 to 60% by weight.

6. Compositions according to Claim 1, **characterized in that** two thermoplastically elastomeric block copolymers are used, the amount of these being from 25 : 75 to 75 : 25 parts by weight, based on 100 parts of the said polymer mixture.

7. Compositions according to Claim 1, **characterized in that** hydrogenated styrene-butadiene block copolymers, in particular in the form of mixtures of two different hydrogenated styrene-butadiene block copolymers, are used which have at least one block derived from styrene and which have at least one block derived from butadiene and from styrene, or that hydrogenated styrene-isoprene block copolymers, in particular in the form of mixtures of two different hydrogenated styrene-isoprene block copolymers, are used which have at least one block derived from styrene and which have at least one other block derived from isoprene, or that hydrogenated styrene-isobutylene block copolymers, in particular in the form of mixtures of two different styrene-isobutylene block copolymers, are used which have at least one block derived from styrene and which have at least one other block derived from isobutylene.

8. Compositions according to Claim 1, **characterized in that** thermoplastically elastomeric block copolymers used comprise mixtures of two or more types of hydrogenated styrene-butadiene block copolymers, where preferably one of the hydrogenated styrene-butadiene block copolymers is selected in such a way that its polystyrene content is from 55 to 65% by weight, based on the total amount of block copolymer, and another of the hydrogenated styrene-butadiene block copolymers is selected in such a way that its polystyrene content is from 35 to 50% by weight, based on the total amount of block copolymer.

9. Process for the production of the compositions according to Claim 1, **characterized in that** the cycloolefin polymer and the at least two thermoplastically elastomeric block copolymers are mixed with one another in kneaders, on roll mills or in extruders, where the styrene content in the thermoplastically elastomeric block copolymers is from 20 to 80% by weight, based on the block copolymers, the amount of thermoplastically elastomeric block copolymers is from 5 to 60% by weight, based on the entire mixture, the mixing ratio of the two block copolymers is from 20:80 to 80:20, based on 100 parts of this polymer mixture, and the styrene content in the thermoplastically elastomeric block copolymers and the amounts of these in the mixture of the thermoplastically elastomeric block copolymers are selected in such a way that the refractive index of the mixture of the thermoplastically elastomeric block copolymers is from 1.520 to 1.540, measured at a wavelength of 589 nm.

10. Process according to Claim 9, **characterized in that** the amount of cycloolefin polymer is from 40 to 95% by weight, based on the entire mixture, preferably from 50 to 90% by weight, and that the amount of thermoplastically elastomeric block copolymers is from 5 to 60% by weight, based on the entire mixture, and that additives that are per se conventional are optionally also added, the total proportion of these being up to 50% by weight, based on the entire mixture, preferably up to 30% by weight.

11. Process according to Claim 9, **characterized in that** the mixing of the components takes place in a twin-screw extruder.

12. Use of the compositions according to Claim 1 for the production of containers of any type, of foils, of sheets or of optical components.

13. Use according to Claim 12, **characterized in that** the compositions are used for the production of pharmaceutical-substance containers, of syringe bodies, of containers for food or drink, of lenses or gratings for optical devices, of optical conductors, or of sheets or foils for packaging.

14. Use according to Claim 13, **characterized in that** the pharmaceutical-substance containers are selected from the group of bottles for solid or liquid pharmaceutical substances, cartridges or bags for medical ingredients.

15. Use according to Claim 13, **characterized in that** the containers for food or drink are selected from the group of bottles, boxes, vessels, cups and dishes in which food or drink is stored or is provided for consumption, in particular babies' bottles.
